# FASCICULE DE BREVET EUROPEEN

(11) **EP 1 008 787 B1**
(45) Date de publication et mention de la délivrance du brevet: **24.03.2004**
(21) Numéro de dépôt: 99403084.9
(22) Date de dépôt: 09.12.1999
(51) Int. Cl.: F16J 15/32

(54) **Joint à brosse à double contact**
Doppelkontakt- Bürstendichtung
Double contact seal brush

(30) Priorité: 10.12.1998 FR 9815572
(43) Date de publication de la demande: 14.06.2000
(73) Titulaire: SNECMA MOTEURS, 75015 Paris (FR)
(72) Inventeur: Plona, Daniel Georges, 77870 Vulaines sur Seine (FR); Thore, Monique Andrée, 91560 Crosnes (FR)
(74) Mandataire: Berrou, Paul

(56) Documents cités:
- EP-A- 0 211 275
- FR-A- 2 607 893

## Description

### Domaine de l'invention

L'invention concerne l'étanchéité entre deux enceintes ou volumes soumis à des pressions différentes et localisés autour d'un axe ou d'un arbre tournant. Elle concerne, en particulier, les turbomachines aéronautiques qui utilisent très fréquemment le type de joint d'étanchéité, appelé joint à brosse.

### Art antérieur et problème posé

Les joints à brosse se présentent sous la forme de faisceaux de fils, fibres ou brins qui peuvent être métalliques, organiques ou synthétiques. Le choix du matériau est dicté par les conditions d'environnement et de fonctionnement du joint à brosse, c'est-à-dire par la nature des fluides à étancher, par les températures et les pressions régnant de part et d'autre du joint.

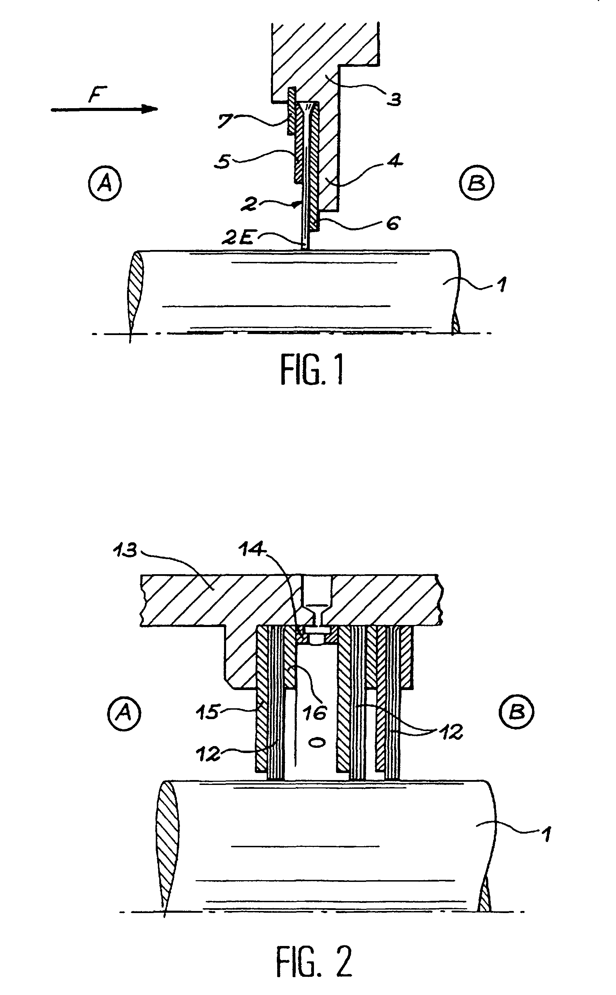

En référence à la figure 1, un de ces types de joints permet d'isoler deux volumes ou deux enceintes A et B entourant un arbre rotatif 1. Le faisceau de fils 2 est, de préférence, disposé radialement par rapport à cet arbre rotatif 1 et son extrémité 2E touche la surface extérieure de l'arbre rotatif 1. Le faisceau de fils 2 est monté dans un support fixe 3 qui constitue le support du joint. En considérant le sens du flux d'air circulant à travers le joint et symbolisé par la flèche F, on utilise, de préférence, une bague amont 5 placée en amont du faisceau de fils 2 et positionnée au moyen d'une bague de fixation 7, fixée elle-même dans le support de joint 3. On utilise également une bague aval 6 fixée en aval du faisceau de fils 2 et placée en appui contre une nervure 4 du support de joint 3. On remarque que la bague aval 6 a un diamètre intérieur plus restreint que la bague amont 5. En d'autres termes, la bague aval supporte sur une longueur plus importante le faisceau de fils 2 que la bague amont 5. L'extrémité 2E du faisceau 2 bénéficie donc d'une certaine liberté, surtout du côté amont, c'est-à-dire de la bague amont 2. On délimite ainsi deux régions bien séparées par le joint et dans lesquelles il peut régner des pressions différentes.

En référence à la figure 2, par la demande de brevet français 2 607 893, on connaît un joint à brosse comprenant plusieurs faisceaux et, en particulier, trois dans le cas représenté. Les trois faisceaux de fils 12 sont fixés perpendiculairement à l'arbre rotatif 1, par rapport auquel ils doivent isoler plusieurs régions, en particulier, les régions amont A et aval B, placées de part et d'autre de cet ensemble de trois faisceaux à fils 12. Ces faisceaux de fils 12 sont maintenus par des bagues amont 15 et aval 16 et sont positionnés par rapport à un support de joint 13 au moyen d'une nervure 14 de ce dernier.

La définition technologique de tous ces types de joints à brosse est bien connue. Par contre, la fabrication de ces joints à brosse n'est pas toujours simple et de bonne qualité.

Les joints à brosse peuvent également être disposés axialement, par exemple dans le cadre d'applications semi-statiques, ou bien pour équiper un joint axial asservi. Dans ce cas, la mise en oeuvre des techniques classiques utilisées dans la conception des joints radiaux métalliques est impossible.

Le but de cette invention est de proposer une conception de joints à brosse axiaux à double barrière d'étanchéité, cette conception est également applicable aux joints radiaux, même si le montage du joint s'avère plus complexe.

### Résumé de l'invention

A cet effet, l'objet principal de l'invention est un joint à brosse à double contact, axial ou radial, pour assurer l'étanchéité entre deux enceintes soumises à des pressions différentes et situées autour d'un arbre, tournant ou fixe, comprenant :
- deux faisceaux d'étanchéité flexibles, parallèles entre eux, et dont l'extrémité de chacun est en contact avec la surface de l'arbre tournant ou fixe ; et
- un corps de maintien dans lequel sont fixés les deux faisceaux d'étanchéité flexible.

Selon une caractéristique principale de l'invention, les deux faisceaux d'étanchéité flexibles sont constitués par un unique ruban flexible en forme de U dont la partie centrale est fixée dans le corps de maintien.

Dans sa réalisation préférentielle, le corps de maintien est formé de deux anneaux, un anneau intérieur et un anneau extérieur, tous deux en forme de U et s'imbriquant l'un dans l'autre.

De préférence, les branches des deux anneaux en forme de U ne sont pas de la même longueur, de sorte que l'extrémité de chaque faisceau d'étanchéité n'est en contact qu'avec un seul anneau.

Dans le cas d'une application radiale, il est préférable d'utiliser un moyen détrompeur, lors du montage des deux anneaux pour monter ces deux derniers dans le bon sens.

### Liste des figures

L'invention et ses différentes caractéristiques techniques seront mieux comprises à la lecture de la description suivante, accompagnée de quelques figures représentant respectivement :
- figure 1, déjà décrite, en coupe, un premier type de joint à brosse selon l'art antérieur ;
- figure 2, déjà décrite, en coupe, un deuxième type de joint à brosse selon l'art antérieur ;
- figure 3, en coupe, une première réalisation, radiale, du joint à brosse selon l'invention ;
- figure 4, en coupe, un exemple de montage erroné à éviter, lors la réalisation du joint à brosse selon l'invention ;
- figure 5, une deuxième réalisation, radiale, du joint à brosse selon l'invention ; et
- figure 6, une troisième réalisation, axiale, du joint à brosse selon l'invention.

### Description détaillée de deux réalisations de l'invention

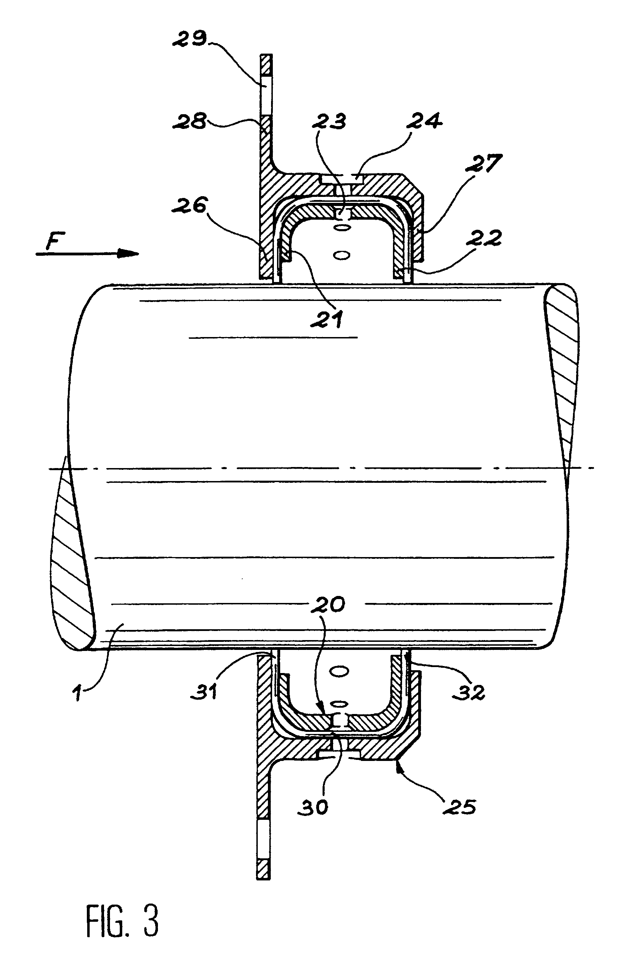

En référence à la figure 3, on considère le joint à brosse de l'invention, de type radial, selon une première réalisation, monté autour d'un arbre rotatif 1. Il est constitué de deux pièces principales qui sont un anneau intérieur 20 et un anneau extérieur 25. Outre le fait que ces deux anneaux intérieur 20 et extérieur 25 sont circulaires, c'est-à-dire qu'ils entourent l'arbre rotatif 1, ils possèdent chacun une section en forme de U. L'anneau intérieur 20 est placé à l'intérieur de l'anneau extérieur 25. Les deux branches 21 et 22 de l'anneau intérieur 20 sont de longueurs différentes, de même que les deux branches 26 et 27 de l'anneau extérieur 25.

De plus, en considérant la flèche F dans une turbomachine aéronautique, la branche amont 26 de l'anneau extérieur 25 est plus longue que la branche aval 27 de ce dernier. Inversement, la branche amont 21 de l'anneau intérieur 20 est plus petite que la branche aval 22 de ce dernier. De ce fait, chacune des deux extrémités 31 et 32 du ruban flexible 30 constituant les deux faisceaux d'étanchéité du joint ne sont en contact chacune qu'avec une seule paroi d'un anneau, soit intérieur 20, soit extérieur 25. Ainsi, l'extrémité amont 31 du ruban flexible 30 est en contact avec l'extrémité amont 26 de l'anneau extérieur 25 et l'extrémité aval 32 du ruban flexible 30 est en contact avec la surface externe de l'extrémité aval 22 de l'anneau intérieur 20. Chaque extrémité 31 et 32 du ruban flexible 30 bénéficie donc d'une liberté de mouvement relativement grande, notamment du côté aval, dans cette réalisation. On note que les extrémités les plus longues, c'est-à-dire l'extrémité amont 26 de l'anneau extérieur et l'extrémité aval 22 de l'anneau intérieur 20, sont relativement proches de la surface externe de l'arbre rotatif 1 pour limiter la liberté de mouvement des deux extrémités 31 et 32 du ruban flexible du côté amont. En d'autres termes, les parties longues ou branches longues 22 et 26 des anneaux intérieur 20 et extérieur 25 sont placées en opposition pour guider les poils ou les fibres constituant la brosse du ruban flexible au plus près de la zone de contact avec la surface de l'arbre rotatif.

L'anneau extérieur 25 est doté d'une branche 28 munie elle-même d'un trou de fixation 29 destiné à fixer le joint dans la turbomachine qui doit être équipée de ce joint à brosse. De même, on prévoit des moyens de fixation entre les deux anneaux interne 20 et externe 25, notamment par des trous de fixation 23 et 24. On peut également prévoir que ces deux anneaux intérieur 20 et extérieur 25 puissent être fixés par soudure, par rivetage ou par emboîtement.

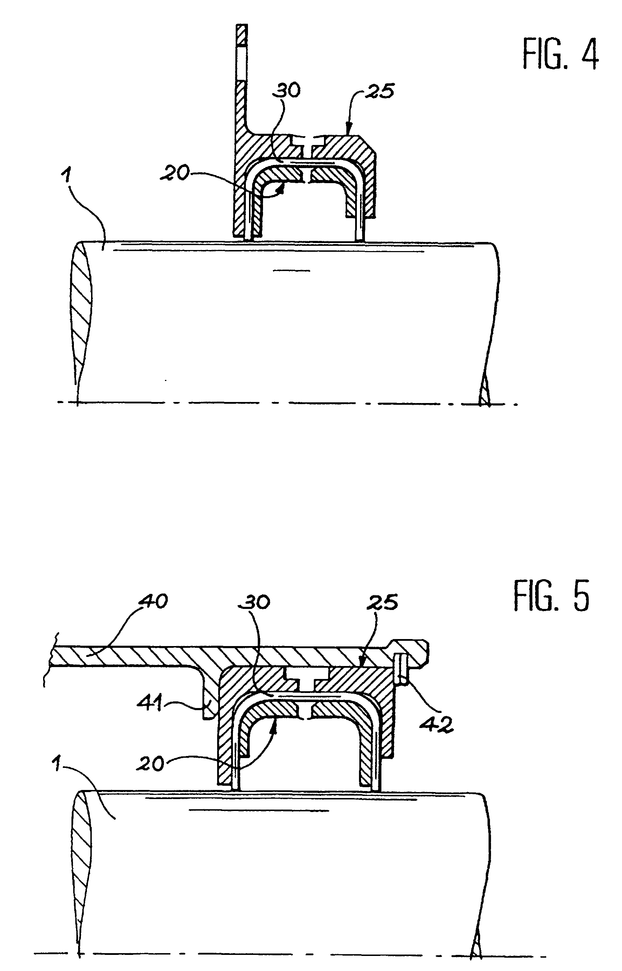

Les deux anneaux intérieur 20 et extérieur 25 doivent être munis d'un moyen détrompeur pour détromper l'opérateur qui réalise le montage de ceux-ci. En effet, lors d'un tel montage, une manipulation hasardeuse pourrait situer du même côté du joint les branches de même longueur des deux panneaux intérieur 20 et extérieur 25, comme le montre la figure 4 sur laquelle l'anneau intérieur 25 a été inversé par rapport au montage de la figure 3. Bien entendu, dans ce cas, le joint à brosse serait beaucoup moins performant, dès le début de son utilisation. Un tel moyen détrompeur (ou de détrompage) pourrait être constitué par Un pion de centrage fixé sur l'un des deux anneaux et une cavité correspondante fixée sur l'autre anneau, ces deux éléments n'étant pas placés dans le plan médian des deux anneaux intérieur 20 et extérieur 25. On peut également envisager que la partie centrale des deux anneaux intérieur 20 et extérieur 25 soit conique, pour ne permettre qu'un seul sens possible de montage.

En référence à la figure 5, une deuxième réalisation du joint à brosse selon l'invention, de type radial, prévoit un montage de celui-ci légèrement différent. En effet, on utilise dans ce cas un support 40 concentrique avec l'arbre rotatif 1. Il possède une nervure de positionnement amont 41 contre laquelle est placé l'anneau extérieur 25. Celui-ci est fixé du côté aval par une bague élastique 42, de manière à se positionner à sa place axiale par rapport à l'arbre rotatif 1. Mise à part cette caractéristique de montage, les caractéristiques et la constitution du joint, c'est-à-dire le ruban flexible 30, l'anneau interne 20 et l'anneau externe 25 peuvent être identiques à ceux décrits à la figure 3.

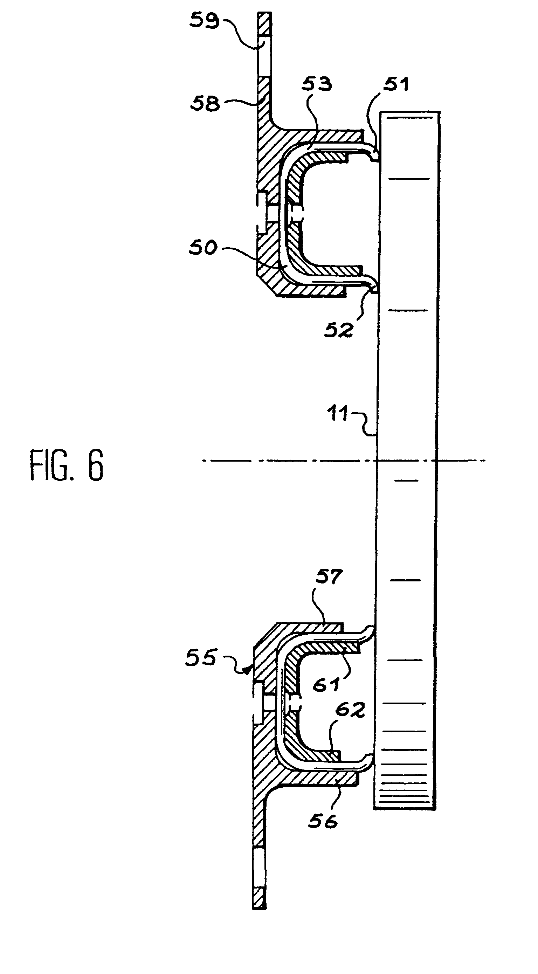

La figure 6 montre un joint de type radial, selon l'invention. Il est ici appliqué contre la surface radiale 11 d'une pièce tournante, telle qu'un plateau ou la surface d'extrémité d'un arbre de grande largeur. Il comporte également un ruban flexible 53 en forme de U maintenu par un anneau intérieur 50 et un anneau extérieur 55. Ces deux anneaux 50 et 55 ont des extrémités 56, 57, 61 et 62 de longueurs différentes deux à deux pour les mêmes raisons que celles évoquées pour le joint axial. Un trou de fixation 59 est prévu sur une branche 58 pour fixer le joint.

Les avantages essentiels du joint à brosse selon l'invention sont que celui-ci peut être radial, comme décrit sur les figures 4 et 5, mais peut être également radial, comme décrit sur la figure 6.

Bien entendu, la fabrication et le montage de celui-ci sont simplifiés, notamment, en ce qui concerne le montage des anneaux intérieur et extérieur, surtout pour le joint de type axial.

## Revendications

1. Joint à brosse à double contact, axial ou radial, pour assurer l'étanchéité entre deux enceintes (A, B) soumises à des pressions différentes et situées autour d'un arbre (1), tournant ou fixe, comprenant :
- deux faisceaux d'étanchéité flexibles et parallèles entre eux et dont l'extrémité de chacun (31, 32, 51, 52) est en contact avec la surface extérieure de l'arbre (1) ; et
- un corps de maintien dans lequel sont fixés les deux faisceaux d'étanchéité flexibles,
**caractérisé en ce que** les deux faisceaux d'étanchéité flexibles sont constitués par un unique ruban flexible (30, 53) en forme de U et dont la partie centrale est fixée dans le corps de maintien.

2. Joint à brosse à double contact selon la revendication 1, **caractérisé en ce que** le corps de maintien est constitué de deux anneaux, un anneau intérieur (20, 50) et un anneau extérieur (25, 55) tous deux en forme de U et s'imbriquant l'un dans l'autre.

3. Joint à brosse à double contact selon la revendication 2, **caractérisé en ce que** les branches (21, 22, 56, 57) des deux anneaux (20, 25, 50, 55) ne sont pas de même longueur, de sorte que l'extrémité (31, 32, 51, 52) de chaque faisceau d'étanchéité n'est en contact qu'avec un seul anneau.

4. Joint à brosse à double contact selon la revendication 2 ou 3, ce joint étant radial, **caractérisé en ce qu'**il comprend un moyen détrompeur, lors du montage des deux anneaux (20, 25) pour monter ces deux anneaux dans le bon sens.

## Claims

1. Double contact (axial or radial) brush seal for sealing between two enclosures (A, B) subjected to different pressures and situated around a rotary or fixed shaft (1), comprising:
- two flexible and mutually-parallel sealing bundles the end of each (31, 32, 51, 52) of which is in contact with the exterior surface of the shaft (1); and
- a holding body in which the two flexible sealing bundles are fixed,
**characterized in that** the two flexible sealing bundles consist of a single U-shaped flexible strip (30, 53) the central part of which U-shape is fixed in the holding body.

2. Double contact brush seal according to Claim 1, **characterized in that** the holding body consists of two rings, an inner ring (20, 50) and an outer ring (25, 55), both in the shape of a U and nesting one inside the other.

3. Double contact brush seal according to Claim 2, **characterized in that** the branches (21, 22, 56, 57) of the two rings (20, 25, 50, 55) are not of the same length, which means that the end (31, 32, 51, 52) of each sealing bundle is in contact with just one ring.

4. Double contact brush seal according to Claim 2 or 3, this seal being radial, **characterized in that** it comprises an error proofing means to ensure that the two rings are mounted the right way round when these two rings (20, 25) are being mounted.

## Patentansprüche

1. Doppelkontakt-Bürstendichtung, die axial oder radial verläuft, um die Dichtigkeit zwischen zwei abgeschlossenen Räumen (A, B) zu gewährleisten, in denen unterschiedliche Drücke herrschen und die um eine drehende oder feststehende Welle (1) herum angeordnet sind, wobei diese Bürstendichtung umfasst:
- zwei biegsame und parallel zueinander verlaufende Dichtungsbündel, die mit ihren jeweiligen Enden (31, 32, 51, 52) in Kontakt mit der Außenfläche der Welle (1) sind; und
- einen Halterungskörper, in dem die beiden biegsamen Dichtungsbündel befestigt sind,
**dadurch gekennzeichnet,**
**dass** die beiden biegsamen Dichtungsbündel aus einem einzelnen biegsamen, U-förmigen Band (30, 53) bestehen, dessen mittlerer Teil in dem Halterungskörper befestigt ist.

2. Doppelkontakt-Bürstendichtung nach Anspruch 1,
**dadurch gekennzeichnet,**
**dass** der Halterungskörper von zwei Ringen gebildet wird, einem Innenring (20, 50) und einem Außenring (25, 55), die beide U-förmig sind und ineinander sitzen.

3. Doppelkontakt-Bürstendichtung nach Anspruch 2,
**dadurch gekennzeichnet,**
**dass** die Schenkel (21, 22, 56, 57) der beiden Ringe (20, 25, 50, 55) nicht die gleiche Länge haben, so dass das Ende (31, 32, 51, 52) jedes Dichtungsbündels sich nur mit einem einzigen Ring in Kontakt befindet.

4. Doppelkontakt-Bürstendichtung nach Anspruch 2 oder 3, wobei diese Dichtung radial verläuft,
**dadurch gekennzeichnet,**
**dass** sie ein Unverwechselbarkeitsmittel aufweist, damit beim Einbau der beiden Ringe (20, 25) diese zwei Ringe in der richtigen Richtung eingesetzt werden.
